# EUROPÄISCHE PATENTSCHRIFT

(11) **EP 4 415 943 B1**
(45) Veröffentlichungstag und Bekanntmachung des Hinweises auf die Patenterteilung: **02.12.2026**
(21) Anmeldenummer: 22786965.8
(22) Anmeldetag: 06.10.2022
(51) Int. Cl.: B29B 17/02, B01D 11/02

(54) **VERFAHREN ZUM RECYCELN VON POLYURETHAN-SCHOTTER-VERBÜNDEN**
METHOD FOR RECYCLING POLYURETHANE BALLAST COMPOSITES
PROCÉDÉ POUR LE RECYCLAGE DE BALLAST EN POLYURÉTHANE

(30) Priorität: 12.10.2021 DE 102021211499
(43) Veröffentlichungstag der Anmeldung: 21.08.2024
(73) Patentinhaber: Hyperion Verwaltung GmbH, 21397 Vastorf (DE)
(72) Erfinder: FRENZEL, Jörg, 21397 Vastorf OT Rohstorf (DE)
(74) Vertreter: Zucker, Volker
(86) Internationale Anmeldenummer: PCT/EP2022/077818
(87) Internationale Veröffentlichungsnummer: WO 2023/061847

(56) Entgegenhaltungen:
- EP-A1- 1 015 118
- WO-A1-2011/147761
- WO-A1-2021/019087
- WO-A1-2021/058652
- DE-C- 185 079
- US-A- 5 614 094
- US-A1- 2015 115 049
- UNKNOWN: "The Wayback Machine -httpsDas patentierte Durflex Oberbausystem", 5 August 2021 (2021-08-05), pages 1 - 6, XP093012327, Retrieved from the Internet <URL:https://web.archive.org/web/20210805231453/https://www.hyperion-ip.eu/dursys/durflex/das-patentierte-durflex-oberbausystem/> [retrieved on 20230109]
- RENKEN LUKAS: "Entwicklung von PU-Asphalt Development of PU-Asphalt from the concept to the practical implementation", 31 December 2019 (2019-12-31), pages 1 - 227, XP093012350, Retrieved from the Internet <URL:http://publications.rwth-aachen.de/record/775118/files/775118.pdf> [retrieved on 20230109]

## Beschreibung

Die Erfindung betrifft ein Verfahren zum Recyceln von Polyurethan-Schotter-Verbünden.

Polyurethan-Schotter-Verbünde kommen im Baugewerbe an den verschiedensten Stellen zum Einsatz, beispielsweise um Absenkungen zu kompensieren. Ein weiteres Anwendungsgebiet ist der Gleisbau. Dabei wird beispielsweise Polyurethan in das Gleisbett gespritzt, von woraus es dann von unten nach oben ausschäumt. Auch sind vorgefertigte Polyurethan-Schottermatten bekannt, die dann im Gleisbett verlegt werden. Schließlich sind auch einzeln mit Polyurethan ummantelte Schottersteine bekannt.

Ein Problem bisher ist, dass, wenn diese Polyurethan-Schotter-Verbünde aus welchen Gründen auch immer entfernt werden müssen, die Polyurethan-Schotter-Verbünde deponiert, thermisch verwertet oder umständlich mechanisch getrennt werden müssen. Bei den bisherigen alternativen Verwertungsverfahren ist ein downcycling unabwendbar, da Qualität und Größe der Steine abnehmen.

Aus dem Fachartikel "The Wayback Machine - httpsDas patentierte Durflex Oberbausystem", 5. August 2021 (2021-08-05), Seiten 1-6, XP093012327, Gefunden im Intgernet: URL:https://web.archive.org/web/20210805231453/https://ww.hyperion-ip.eu/dursys/durflex/das-patentierte-durflex-oberbausystem" sind Verfahren zum Recyclen von Polyurethan-Schotter-Verbunden bekannt, die ein Lösen von Polyurethan durch weitere Zerkleinerung, durch mechanische abrasive Behandlung, ein Lösen durch chemische Behandlung oder ein Entfernen von weiterem Polyurethan durch thermische Behandlung vorgeschlagen.

Aus dem Fachartikel "Renken Lukas: Entwicklung von PU-Asphalt Development of PU-Asphalt from the concept tot he practical implementation", 31. Dezember 2019 (2019-12-31), Seiten 1-227, XP093012350, Gefunden im Internet: URL:http://publications.rwth-aachen.de/record/775118/files/775118.pdf" ist ein Verfahren zum Recyclen von Polyurethan-Schotter-Verbunden bekannt, mit den Verfahrensschritten Kaltfräsen, Sieben und erneutes Zugeben von Polyurethan.

Aus der US 2015/115049 A1 ist ein Verfahren zum Recyclen von Polyurethan-Schotter-Verbunden bekannt, wo das Polyurethan thermisch zersetzt wird und anschließend der verbleibende Schotter im Gleisoberbau eingesetzt wird.

Aus der WO 2021/058652 A1 ist ein Verfahren zum Recyclen eines thermoplastischen Polyurethan-Schotter-Verbundes bekannt, wobei durch Erhitzen das thermoplastische Polyurethan abfließt.

Aus der WO 2011/147761 A1 ist ein weiteres Verfahren bekannt, wo das Polyurethan thermisch zersetzt wird.

Der Erfindung liegt daher das technische Problem zugrunde, ein verbessertes Verfahren zum Recyceln von Polyurethan-Schotter-Verbünden zur Verfügung zu stellen.

Die Lösung des technischen Problems ergibt sich durch ein Verfahren mit den Merkmalen des Anspruchs 1. Weitere vorteilhafte Ausgestaltungen der Erfindung ergeben sich aus den Unteransprüchen.

Das Verfahren zum Recyceln von Polyurethan-Schotter-Verbünden umfasst die folgenden Verfahrensschritte:
a) Befüllen eines Behälters mit einem Polyurethan-Schotter-Verbund, wobei der Behälter eine Lochblende aufweist, die vom Boden des Behälters entfernt angeordnet ist, wobei der Behälter mit einem Lösungsmittel für ausgehärtetes Polyurethan gefüllt ist, wobei der Füllstand des Lösungsmittels über der Lochblende ist,
b) mechanisches Bewegen des Polyurethan-Schotter-Verbunds für eine vorbestimmte Zeit,
c) Entfernen der Schottersteine mit einem Durchmesser größer als der Lochdurchmesser der Lochblende,
d) Herausfiltrieren des geleeartigen, gelösten Polyurethans aus dem Lösungsmittel und
e) Herausfiltrieren von gelösten Restpartikeln in dem Lösungsmittel.

Hierdurch können die Schottersteine von dem Polyurethan getrennt werden und zumindest die Schottersteine wiederverwendet werden. Das Polyurethan kann dann entweder entsorgt oder aber recycelt werden (z.B. im sogenannten Carbonauten- oder Solvolyseverfahren). Die Entsorgung kann beispielsweise durch Deponieren, Verbrennen oder durch bakteriellen Abbau erfolgen. Der Lochdurchmesser wird dabei abhängig davon gewählt, wie groß die recycelten Schottersteine sein sollen. Behälter und Lochblende bestehen dabei aus einem Material, was inert gegenüber dem Lösungsmittel ist. Als Lösungsmittel kommen beispielsweise Ethylacetat, Aceton, Dichlormethan, DMF, THF oder Methylenchlorid infrage. Vorzugsweise wird jedoch EN710 und/oder EN705 der Firma bio8 verwendet, da diese biologisch abbaubar sind. Diese beinhalten Dimethoxymethan, L-(+)-Milchsäure, Ethyl (S)-2-Hydroxypropionat, 2-Aminoethanol und (R)-P-Mentha-1,8-Dien.

Im Rahmen des Verfahrens kann über die vorbestimmte Zeit (Verweildauer) des Polyurethan-Schotter-Verbundes gesteuert werden, ob und wenn ja wieviel Polyurethan an den Schottersteinen verbleibt. So kann es bei einigen Ausführungsformen gewünscht sein, das Polyurethan möglichst vollständig zu entfernen. Es gibt aber auch Ausführungsformen, wo bewusst eine Schichtdicke Polyurethan auf dem Schotterstein verbleiben soll, wobei dann weitere Materialien aufgebracht werden, die dann am Polyurethan haften (siehe z.B. EP 3 061 187 A1).

Weiter sei angemerkt, dass der Polyurethan-Schotter-Verbund vor dem Befüllen gegebenenfalls einer Vorreinigung unterzogen wird, um insbesondere Öle abzuwaschen, da diese das Recyceln von Polyurethan erschweren. Alternativ oder ergänzend kann vorgesehen sein, dass auf der Oberfläche des Lösungsmittels schwimmendes Öl oder sonstige Schwebstoffe abgesaugt oder herausgefiltert wird. Dabei kann die Vorreinigung an den Verschmutzungsgrad angepasst werden.

Die mechanische Bewegung des Polyurethan-Schotter-Verbundes kann durch verschiedene Mittel erzeugt werden. So kann beispielsweise die Lochblende selbst bewegbar sein und hin- und herrütteln, ähnlich einem Schüttelsieb. Alternativ oder ergänzend kann auch eine Schnecke oder ein ansteigendes Förderband oder ein Sternsieb den Verbund bewegen oder die Bewegung der Verbünde mittels (von unten/ seitlich) Luftwellenstöße/ Ultraschall ausgelöst werden. Durch die Bewegung des Verbundes kommt es zu einer gleichmäßigen Benetzung mit dem Lösungsmittel. Um den Prozess zu beschleunigen, sollten die einzelnen Polyurethan-Schotter-Verbünde nicht zu groß sein. Diese können daher wie beispielsweise im Fall von Polyurethan-Matten vorher auf eine entsprechende Größe zerkleinert werden. Das Herausfiltrieren des geleeartigen Polyurethans sowie der gelösten Restpartikel, die sich von den Schottersteinen lösen, hat den Vorteil, dass das Lösungsmittel nicht verschlammt und daher in seiner Reaktivität nicht nachlässt. Weiter kann vorgesehen sein, dass mittels einer Pumpe Lösungsmittel nach oben gepumpt wird und von oben auf den Verbund gesprüht wird.

In einer Ausführungsform werden die entfernten Schottersteine in einen weiteren Behälter transportiert, wobei in dem Behälter noch abtropfendes Lösungsmittel und/oder geleeartiges Polyurethan gesammelt wird. Das Polyurethan/ Feinanteile kann dann von dem Lösungsmittel getrennt und das Lösungsmittel kann dann wieder dem Prozess zugeführt werden.

In einer weiteren oder alternativen Ausführungsform werden die entfernten Schottersteine mittels eines Transportbandes zu einem weiteren Behälter transportiert, wobei die Schottersteine während des Transports weiter gereinigt werden. Durch die Rotation der Schottersteine auf dem Transportband wird gegebenenfalls noch anhaftendes geleeartiges Polyurethan abgewischt. Durch entsprechende Ausbildung des Transportbandes (z.B. als Rüttelband oder Sternsieb) kann der Effekt noch verstärkt werden. Alternativ oder ergänzend können die Schottersteine mit Wasserdruck, Stahlstrahlen oder CO₂-Waschung weiter gereinigt werden. Auch ein Abbürsten mit in Lösungsmitteln getränkten Bürsten oder ein Abstreifen mittels (hängender) starr/ beweglicher Bänder ist möglich.

In einer weiteren Ausführungsform wird der Behälter nach dem Befüllen mit dem Polyurethan-Schotter-Verbund geschlossen. Somit wird verhindert, dass gegebenenfalls entstehende Gase ungefiltert austreten können. Dabei kann vorgesehen sein, dass durch ein oder mehrere Luken und/oder Kameras der Prozessraum beobachtet werden kann.

In einer weiteren Ausführungsform wird die Temperatur in dem Behälter auf unter 35° C geregelt, da dann der Auflösungsprozess von Polyurethan wirksamer ist.

In einer weiteren Ausführungsform wird aus den herausgefilterten Restpartikeln Steinmehl herausgefiltert, das separat z.B. auf Ackerflächen aufgebracht werden kann oder deponiert wird. Da diese Menge im Vergleich zum ehemaligen Volumen (gegenüber einer Komplettdeponierung der Verbünde) verschwindend gering ist, werden knapper Deponieraum, Verkehre und Kosten gespart.

Vorzugsweise wird die herausgefilterte Masse zentrifugiert und in Polyurethan, Steinmehl und sonstige Bestandteile getrennt. Dabei werden größere Schottersteine, die durch die Löcher der Lochblende gefallen sind, vorher separiert. Durch das Zentrifugieren werden weitere Stoffe vom Polyurethan getrennt, die dessen Recyclingfähigkeit beeinträchtigen könnten.

Weiter vorzugsweise wird anschließend das geleeartige Polyurethan gepresst, wobei das dabei austretende Lösungsmittel gegebenenfalls wieder dem Prozess zugeführt werden kann. Durch Pressen ist die Weiterverarbeitung und/ oder die Deponierung effizienter.

Ein bevorzugtes Anwendungsgebiet ist das Recyceln von Polyurethan-Gleisschotterstein-Verbünden.

Die Erfindung wird nachfolgend anhand eines bevorzugten Ausführungsbeispiels näher erläutert. Die einzige Figur zeigt eine schematische Vorrichtung zum Recyceln von Polyurethan-Schotter-Verbünden.

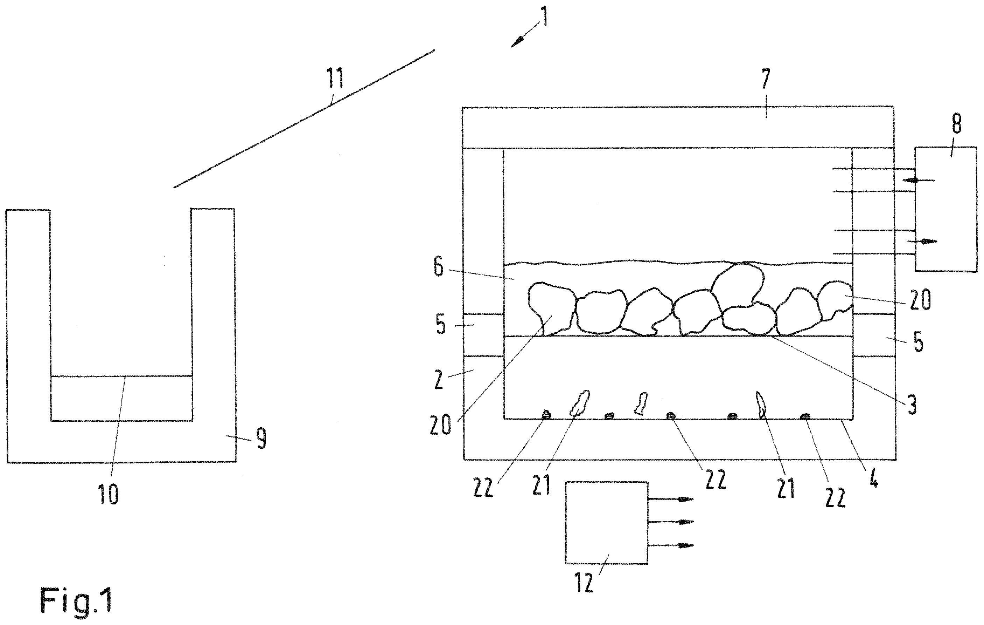

In Fig. 1 ist schematisch eine Vorrichtung 1 zum Recyceln von Polyurethan-Schotter-Verbünden 20 dargestellt. Die Vorrichtung 1 weist einen ersten Behälter 2 auf, der eine Lochblende 3 aufweist, die von einem Boden 4 des Behälters 2 beabstandet ist. Über Aktoren 5 ist die Lochblende 3 mechanisch bewegbar, sodass die Lochblende eine Rüttelbewegung durchführen kann. Der Behälter 2 ist mit einem Lösungsmittel 6 für ausgehärteten/verarbeiteten Polyurethanschaum gefüllt, wobei der Füllstand des Lösungsmittels 6 über der Lochblende 3 liegt und vorzugsweise den Polymethan-Schotter-Verbund 20 vollständig bedeckt. Der Behälter 2 weist einen Deckel 7 auf, der nach dem Befüllen des Behälters 2 mit dem Polyurethan-Schotter-Verbund 20 geschlossen wird. Weiter ist der Behälter 2 mit einer Kühlung 8 verbunden, über die Kaltluft in den Behälter 2 eingeblasen wird. Vorzugsweise regelt die Kühlung 8 die Temperatur im Innern des Behälters 2 auf eine Temperatur unter 35° C. Vorzugsweise liegt dabei die Soll-Temperatur zwischen 25° C bis 35° C. Hierzu erhält die Kühlung beispielsweise Daten eines nicht dargestellten Temperatursensors im Behälter 2.

Weiter weist die Vorrichtung 1 einen weiteren Behälter 9 auf, der ebenfalls eine Lochblende 10 aufweist. Zwischen dem ersten Behälter 2 und dem weiteren Behälter 9 ist ein Transportband 11 angeordnet. Schließlich weist die Vorrichtung 1 eine Zentrifuge 12 auf.

Das mit der Vorrichtung 1 durchgeführte Verfahren zum Recyceln von Polyurethan-Schotter-Verbünden 20 soll nun kurz erläutert werden. In einem ersten Schritt wird der Behälter 2 mit Polyurethan-Schotter-Verbünden 20 gefüllt. Dabei kann das Lösungsmittel 6 bereits im Behälter 2 sein oder aber nachträglich eingeleitet werden. Anschließend wird der Deckel 7 geschlossen. Danach wird der Polyurethan-Schotter-Verbund 20 mechanisch bewegt, um eine gleichmäßige Benetzung mit dem Lösungsmittel 6 zu erreichen. Im dargestellten Ausführungsbeispiel erfolgt dies durch Ansteuerung der Aktoren 5, die einen Rüttelbewegung der Lochblende 3 erzeugen. Das Lösungsmittel 6 löst das an dem Schotter anheftende Polyurethan auf, das dann als geleeartiges Polyurethan 21 im Lösungsmittel 6 gelöst ist und durch die Löcher in der Lochblende 3 nach unten sinkt. Ebenso sinken entsprechend kleine Schottersteine und andere an dem Schotter oder dem ausgehärteten Polyurethan anhaftende Restpartikel 22 zum Boden 4. Die Restpartikel 22 umfassen beispielsweise Steinmehl, Metalle und Öle. Über eine nicht dargestellte Filtriereinrichtung wird das geleeartige Polyurethan 21 und die Restpartikel 22 aus dem Lösungsmittel 6 herausfiltriert und der Zentrifuge 12 zugeführt. In der Zentrifuge 12 wird das geleeartige Polyurethan 21 und Steinmehl von den restlichen Bestandteilen getrennt. Anschließend wird das Polyurethan 21 gepresst und der Wiederverwendung oder Deponierung zugeführt. Alternativ kann das am Schotter anhaftende Polyurethan auch nur angelöst werden.

Die auf der Lochblende 3 verbleibenden Schottersteine werden durch geeignete Transportmittel aus dem Behälter 2 entfernt und mittels des Transportbandes 11 zu dem weiteren Behälter 9 transportiert. Noch gegebenenfalls an dem Schotter anhaftendes Polyurethan kann durch mechanische Bewegungen des Transportbandes 11 oder durch zusätzliche Reinigungsschritte (z.B. Stahlstrahlen, Wasserdruck, Bürsten, Luftdruck) abgestreift werden. Schließlich werden die Schottersteine in den weiteren Behälter gekippt, wo noch restliches Lösungsmittel 6 oder Polyurethanreste abtropfen können. Mittels Warmluft können die Schottersteine dann getrocknet und wiederverwendet werden. Gegebenenfalls noch anhaftende Polyurethan-Reste sind unschädlich und erhöhten die "Klebekraft" zwischen den Schottersteinen.

### Bezugszeichenliste

- 1: Vorrichtung
- 2: Behälter
- 3: Lochblende
- 4: Boden
- 5: Aktor
- 6: Lösungsmittel
- 7: Deckel
- 8: Kühlung
- 9: Behälter
- 10: Lochblende
- 11: Transportband
- 12: Zentrifuge
- 20: Polyurethan-Schotter-Verbund
- 21: Polyurethan
- 22: Restpartikel

## Patentansprüche

1. Verfahren zum Recyceln von Polyurethan-Schotter-Verbünden (20), umfassend die folgenden Verfahrensschritte:
a) Befüllen eines Behälters (2) mit einem Polyurethan-Schotter-Verbund (20), wobei der Behälter (2) eine Lochblende (3) aufweist, die vom Boden (4) des Behälters (2) entfernt angeordnet ist, wobei der Behälter (2) mit einem Lösungsmittel (6) für ausgehärteten Polyurethan gefüllt ist, wobei der Füllstand des Lösungsmittels (6) über der Lochblende (3) liegt,
b) mechanisches Bewegen des Polyurethan-Schotter-Verbundes (20) für eine vorbestimmte Zeit,
c) Entfernen der Schottersteine mit einem Durchmesser größer als der Lochdurchmesser der Lochblende (3),
d) Herausfiltrieren des geleeartigen, gelösten Polyurethans (21) aus dem Lösungsmittel (6) und
e) Herausfiltrieren von gelösten Restpartikeln (22) in dem Lösungsmittel (6).

2. Verfahren nach Anspruch 1, **dadurch gekennzeichnet, dass** die entfernten Schottersteine in einen weiteren Behälter (9) transportiert werden, wobei in dem Behälter (9) noch abtropfendes Lösungsmittel (6) und/oder geleeartiges Polyurethan (21) gesammelt wird.

3. Verfahren nach Anspruch 1 oder 2, **dadurch gekennzeichnet, dass** die entfernten Schottersteine mittels eines Transportbandes (11) zu einem weiteren Behälter (9) transportiert werden, wobei die Schottersteine während des Transports weiter gereinigt werden.

4. Verfahren nach einem der vorangegangenen Ansprüche, **dadurch gekennzeichnet, dass** der Behälter (2) nach dem Befüllen mit dem Polyurethan-Schotter-Verbund (20) geschlossen wird.

5. Verfahren nach Anspruch 4, **dadurch gekennzeichnet, dass** die Temperatur in dem Behälter (2) auf unter 35° C geregelt wird.

6. Verfahren nach einem der vorangegangenen Ansprüche, **dadurch gekennzeichnet, dass** aus den herausgefilterten Restpartikeln (22) Steinmehl, Schwebschadstoffe herausgefiltert wird.

7. Verfahren nach einem der vorangegangenen Ansprüche, **dadurch gekennzeichnet, dass** das herausgefilterte, geleeartige Polyurethan (21) gepresst wird.

## Claims

1. A method for recycling polyurethane-ballast composites (20), comprising the following process steps:
a) Filling a container (2) with a polyurethane-ballast composite (20), wherein the container (2) comprises a perforated plate (3) arranged at a distance from the base (4) of the container (2), and wherein the container (2) is filled with a solvent (6) for cured polyurethane, the level of the solvent (6) being above the perforated plate (3),
b) mechanically agitating the polyurethane-ballast composite (20) for a predetermined time,
c) removing the ballast stones with a diameter greater than the hole diameter of the perforated plate (3),
d) filtering out the gel-like, dissolved polyurethane (21) from the solvent (6), and
e) filtering out any residual dissolved particles (22) from the solvent (6).

2. The method according to claim 1, **characterised in that** the removed ballast stones are transported into a further container (9), wherein solvent (6) and/or gel-like polyurethane (21) still dripping off are collected in the container (9).

3. A method according to claim 1 or 2, **characterised in that** the removed ballast stones are transported to a further container (9) by means of a conveyor belt (11), whereby the ballast stones are further cleaned during transport.

4. A method according to one of the preceding claims, **characterised in that** the container (2) is sealed after being filled with the polyurethane-ballast composite (20).

5. A method according to claim 4, **characterised in that** the temperature in the container (2) is controlled to below 35°C.

6. A method according to any of the preceding claims, **characterised in that** stone dust and suspended pollutants are filtered out from the filtered-out residual dissolved particles (22).

7. A method according to one of the preceding claims, **characterised in that** the filtered-out, jelly-like polyurethane (21) is compressed.

## Revendications

1. Procédé de recyclage de composites de polyuréthane-gravier (20), comprenant les étapes suivantes :
a) le remplissage d'un récipient (2) avec un composite de polyuréthane-gravier (20), le récipient (2) comportant un tamis perforé (3) disposé à distance du fond (4) du récipient (2), le récipient (2) étant rempli d'un solvant (6) pour polyuréthane durci, le niveau du solvant (6) se situant au-dessus du tamis perforé (3),
b) agitation mécanique du composite polyuréthane-gravier (20) pendant une durée prédéterminée,
c) retirer les gravillons dont le diamètre est supérieur au diamètre des trous du tamis perforé (3),
d) filtration du polyuréthane dissous (21), sous forme de gel, hors du solvant (6) et
e) filtration des particules résiduelles dissoutes (22) présentes dans le solvant (6).

2. Procédé selon la revendication 1, **caractérisé en ce que** les gravillons retirés sont transportés vers un autre récipient (9), dans lequel sont collectés le solvant (6) qui s'égoutte encore et/ou le polyuréthane gélatineux (21).

3. Procédé selon la revendication 1 ou 2, **caractérisé en ce que** les gravillons retirés sont transportés vers un autre récipient (9) au moyen d'un tapis roulant (11), les gravillons retirés étant encore nettoyés pendant le transport.

4. Procédé selon l'une des revendications précédentes, **caractérisé en ce que** le récipient (2) est fermé après avoir été rempli du composite polyuréthane-gravier (20).

5. Procédé selon la revendication 4, **caractérisé en ce que** la température à l'intérieur du conteneur (2) est régulée à une valeur inférieure à 35 °C.

6. Procédé selon l'une des revendications précédentes, **caractérisé en ce que** la poussière de pierre et les polluants en suspension sont filtrés à partir des particules résiduelles dissoutes (22) filtrées.

7. Procédé selon l'une des revendications précédentes, **caractérisé en ce que** le polyuréthane (21) filtré, de consistance gélatineuse, est comprimé.
